(19) Europäisches Patentamt
European Patent Office
Office européen des brevets

(11) **EP 4 123 496 A2**

(12) **EUROPEAN PATENT APPLICATION**

(43) Date of publication:
**25.01.2023 Bulletin 2023/04**

(21) Application number: **22206520.3**

(22) Date of filing: **10.11.2022**

(51) International Patent Classification (IPC):
**G06F 40/279** (2020.01)   **G06F 40/216** (2020.01)
**G06F 40/30** (2020.01)

(52) Cooperative Patent Classification (CPC):
**G06F 40/279;** G06F 40/216; G06F 40/30

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.12.2021 CN 202111625127**

(71) Applicant: **Beijing Baidu Netcom
Science Technology Co., Ltd.
Beijing 100085 (CN)**

(72) Inventors:
• LIU, Han
 **Beijing, 100085 (CN)**
• HU, Teng
 **Beijing, 100085 (CN)**
• FENG, Shikun
 **Beijing, 100085 (CN)**
• CHEN, Yongfeng
 **Beijing, 100085 (CN)**

(74) Representative: **Maiwald GmbH
Elisenhof
Elisenstraße 3
80335 München (DE)**

(54) **METHOD AND APPARATUS FOR EXTRACTING TEXT INFORMATION, ELECTRONIC DEVICE AND STORAGE MEDIUM**

(57)    A method for extracting text information includes: acquiring a text to be extracted and a target field name; extracting candidate text information matching the target field name from the text to be extracted based on the text to be extracted and the target field name; and acquiring target text information matching fusion semantics of the text to be extracted, the target field name and the candidate text information by filtering the candidate text information based on the fusion semantics. Therefore, when the candidate text information matching the target field name is extracted from the text to be extracted, the candidate text information is filtered based on the fusion semantics of the text to be extracted, the target field name and the candidate text information, which improves the accuracy of extracting text information.

FIG. 1

## Description

## TECHNICAL FIELD

The disclosure relates to the field of artificial intelligence (AI) technologies, specifically to, the field of deep learning (DL) and natural language processing (NLP) technologies, and particularly to, a method and an apparatus for extracting text information, an electronic device and a storage medium.

## BACKGROUND

In a process of processing a document, a requirement for extracting key information is generally existed, for example, when a contract document is processed, information such as "Party A", "Party B" and "contract amount" in the contract document needs to be known; when a legal judgment document is processed, information such as "defendant", "plaintiff" and "alleged charge" in the legal judgment document needs to be known.

However, it is of great importance how to accurately extract key information from a document to improving an accuracy of a downstream task in an actual application scene.

## SUMMARY

The disclosure provides a method and an apparatus for extracting text information, an electronic device and a storage medium.

According to an aspect of the disclosure, a method for extracting text information is provided, and includes: acquiring a text to be extracted and a target field name; extracting candidate text information matching the target field name from the text to be extracted based on the text to be extracted and the target field name; and acquiring target text information matching fusion semantics of the text to be extracted, the target field name and the candidate text information by filtering the candidate text information based on the fusion semantics.

According to another aspect of the disclosure, an apparatus for extracting text information is provided, and includes: an acquiring module, configured to acquire a text to be extracted and a target field name; an extraction module, configured to extract candidate text information matching the target field name from the text to be extracted based on the text to be extracted and the target field name; and a filtering module, configured to acquire target text information matching fusion semantics of the text to be extracted, the target field name and the candidate text information by filtering the candidate text information based on the fusion semantics.

According to another aspect of the disclosure, an electronic device is provided, and includes: at least one processor; and a memory communicatively connected to the at least one processor; in which the memory is stored with instructions executable by the at least one processor, and the instructions are executed by the at least one processor, so that the at least one processor may perform the method for extracting text information in the disclosure.

According to another aspect of the disclosure, a non-transitory computer readable storage medium stored with computer instructions is provided. The computer instructions are configured to cause a computer to perform the method for extracting text information in the disclosure.

According to another aspect of the disclosure, a computer program product including a computer program is provided. When the computer program is performed by a processor, the method for extracting text information is implemented.

Preferred embodiments are defined in the dependent claims.

It should be understood that, the content described in the part is not intended to identify key or important features of embodiments of the disclosure, nor intended to limit the scope of the disclosure. Other features of the disclosure will be easy to understand through the following specification.

## BRIEF DESCRIPTION OF THE DRAWINGS

The drawings are intended to better understand solutions, and do not constitute a limitation to the disclosure.

FIG. 1 is a flowchart of a method for extracting text information according to a first embodiment of the disclosure.
FIG. 2 is a flowchart of a method for extracting text information according to a second embodiment of the disclosure.
FIG. 3 is a diagram of a structure of an apparatus for extracting text information according to a third embodiment of the disclosure.
FIG. 4 is a diagram of a structure of an apparatus for extracting text information according to a fourth embodiment of the disclosure.
FIG. 5 is a block diagram illustrating an electronic device configured to achieve a method for extracting text information in embodiments of the disclosure.

## DETAILED DESCRIPTION

Embodiments of the disclosure are described as below with reference to the accompanying drawings, which include various details of embodiments of the disclosure to facilitate understanding, and should be considered as merely exemplary. Similarly, for clarity and conciseness, descriptions of well-known functions and structures are omitted in the following descriptions.

In a process of processing a document, a requirement for extracting key information is generally existed, for example, when a contract document is processed, information such as "Party A", "Party B" and "contract amount" in the contract document needs to be known; when a legal judgment document is processed, information such as "defendant", "plaintiff' and "alleged charge" in the legal judgment document needs to be known. However, it is of great importance how to accurately extract key information from a document to improving an accuracy of a downstream task in an actual application scene.

A method and an apparatus for extracting text information, an electronic device, a non-transitory computer readable storage medium and a computer program product are provided in the disclosure. A text to be extracted and a target field name are acquired, candidate text information matching the target field name is extracted from the text to be extracted based on the text to be extracted and the target field name, and target text information matching fusion semantics is acquired by filtering the candidate text information based on the fusion semantics of the text to be extracted, the target field name and the candidate text information, which improves the accuracy of extracting text information.

A method and an apparatus for extracting text information, an electronic device, a non-transitory computer readable storage medium and a computer program product, provided in the disclosure, relate to the field of AI technologies, and specifically to the field of DL and NLP technologies.

AI is a subject that learns simulating by a computer certain thinking processes and intelligent behaviors (such as learning, reasoning, thinking, planning) of human beings, which covers hardware-level technologies and software-level technologies. AI hardware technologies generally include technologies such as sensors, dedicated AI chips, cloud computing, distributed storage, big data processing, etc.; and AI software technologies mainly include computer vision technology, speech recognition technology, NLP technology and machine learning(ML), DL, big data processing technology, knowledge graph (KG) technology, etc.

A method and an apparatus for extracting text information, an electronic device, a non-transitory computer readable storage medium and a computer program product in some embodiments of the disclosure are described below in combination with the accompanying drawings.

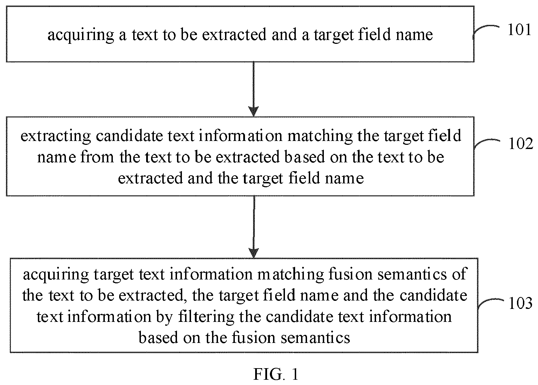

FIG. 1 is a flowchart of a method for extracting text information according to a first embodiment of the disclosure. It needs to be noted that, an executive body of the method for extracting text information in some embodiments is an apparatus for extracting text information in some embodiments. The apparatus for extracting text information may be implemented by means of software and/or hardware and may be configured in an electronic device. The electronic device may include but not limited to a terminal device such as a smart phone, a computer, a server, which is not limited in the disclosure.

As illustrated in FIG. 1, the method for extracting text information may include the following.

At block 101, a text to be extracted and a target field name are acquired.

The text to be extracted is a text from which key information needs to be extracted. The text to be extracted may be a text in any field, for example, a text in a contract, a text in a legal judgment, which is not limited in the disclosure.

The target field name is a pre-specified field name corresponding to text information needed to be extracted. For example, the target field name may be "Party A", or "Party B" in the contract field, or "defendant", "plaintiff" in the legal field.

It needs to be noted that, the target field name in some embodiments of the disclosure may be one field name, and also may be a plurality of field names, which is not limited in the disclosure.

For example, if it is assumed that the text to be extracted is "Party A: Zhang San, Party B: Li Si", and the target field names are "Party A" and "Party B", "Zhang San" matching the target field name "Party A" and "Li Si" matching the target field name "Party B" need to be accurately extracted from the text to be extracted in some embodiments of the disclosure.

At block 102, candidate text information matching the target field name is extracted from the text to be extracted based on the text to be extracted and the target field name.

The candidate text information is an intermediate result extracted from text information in some embodiments of the disclosure.

For example, if it is assumed that the text to be extracted is "Party A: Zhang San, Party B: Li Si", and the target field names are "Party A" and "Party B", in some embodiments of the disclosure, the candidate text information matching the target field name "Party A", extracted from the text to be extracted, may be "Zhang San", and also may be "Li Si", and the candidate text information matching the target field name "Party B" may be "Zhang San", and also may be "Li Si".

It needs to be noted that, in some embodiments of the disclosure, any manner for extracting text information in the related art may be adopted, to extract the candidate text information matching the target field name from the text to be extracted based on the text to be extracted and the target field name, which is not limited in the disclosure.

At block 103, target text information matching fusion semantics of the text to be extracted, the target field name and the candidate text information is acquired by filtering the candidate text information based on the fusion semantics.

It may be understood that, in some embodiments of the disclosure, the candidate text information matching the target field name, extracted from the text to be extracted based on the text to be extracted and the target field name, may be an unreasonable extraction result. In order to ensure the accuracy of the text information extraction result, in some embodiments of the disclosure, a more accurate extraction result may be acquired by filtering the extracted candidate text information.

Specifically, it may be determined whether the candidate text information is reasonable based on the fusion semantics of the text to be extracted, the target field name and the candidate text information; if not, it is determined that the candidate text information needs to be filtered out; if yes, it is determined that the candidate text information does not need to be filtered out, further to acquire filtered target text information. The target text information is a final accurate text information extraction result. The fusion semantics fuse semantic information of the text to be extracted, semantic information of the target field name and semantic information of the candidate text information.

When the candidate text information the matches fusion semantics, it may be determined that the candidate text information is reasonable; and when the candidate text information does not match the fusion semantics, it may be determined that the candidate text information is unreasonable.

In the method for extracting text information in some embodiments of the disclosure, the text to be extracted and the target field name are acquired, the candidate text information matching the target field name is extracted from the text to be extracted based on the text to be extracted and the target field name, and the target text information matching the fusion semantics of the text to be extracted, the target field name and the candidate text information is acquired by filtering the candidate text information based on the fusion semantics, which improves the accuracy of extracting text information.

It needs to be noted that, in a possible implementation, the method for extracting text information in some embodiments of the disclosure may be achieved by embedding a model for extracting text information into an apparatus for extracting text information. The model for extracting text information is an end-to-end neural network model. When the text information is extracted, the text to be extracted and the target field name may be input into the model for extracting text information, and the model for extracting text information may acquire the target text information based on the text to be extracted and the target field name.

The model for extracting text information may include an extraction module and a filtering module, inputs of the extraction module are the text to be extracted and the target field name, the extraction module may extract the candidate text information matching the target field name from the text to be extracted based on the text to be extracted and the target field name as output, inputs of the filtering module are the text to be extracted, the target field name and the candidate text information output by the extraction module, and the filtering module may acquire the target text information matching the fusion semantics of the text to be extracted, the target field name and the candidate text information by filtering the candidate text information based on the fusion semantics.

The extraction module may be achieved by a model for extracting key information of a text in the related art, which is not limited in the disclosure.

The filtering module may be trained in a deep learning manner by taking real data as training data. The training data includes a plurality of groups of training samples, in which each group of training samples includes a sample text, a sample field name and sample text information in the sample text, for example, a sample text "Party A: Zhang San", a sample field name "Party A" and sample text information "Zhang San", or a sample text "Party A: Zhang San", a sample field name "Party B" and sample text information "Zhang San", and each group of training sample is tagged based on whether the sample text information matches the sample field name.

When the filtering module is trained, the filtering module may acquire fusion semantics of the sample text, the sample field name and the sample text information in each group of training samples, and output a predicted result whether the sample text information in the group of training samples matches the fusion semantics based on the fusion semantics, and further may determine a difference between the tag whether the sample text information matches the sample field name and the predicted result of the sample text information, and adjust a model parameter of the filtering module based on the difference until the prediction accuracy of the filtering module is greater than a preset accuracy threshold, and training ends, to acquire the trained filtering module. The trained filtering module may predict whether the candidate text information matches the fusion semantics of the text to be extracted, the target field name and the candidate text information based on the fusion semantics, and filter the candidate text information based on the predicted result.

It needs to be noted that, the extraction module and the filtering module may be trained simultaneously, or may be trained independently, which is not limited in the disclosure.

Since the filtering module is increased only in the downstream of the extraction module, the filtering module only filters the candidate text information extracted by the extraction module. Therefore, in order to improve the accuracy of extracting text information, compared to a larger and deeper extraction model adopted to extract text information, it takes less time to achieve the same effect using the method for extracting text information in some embodiments of the disclosure.

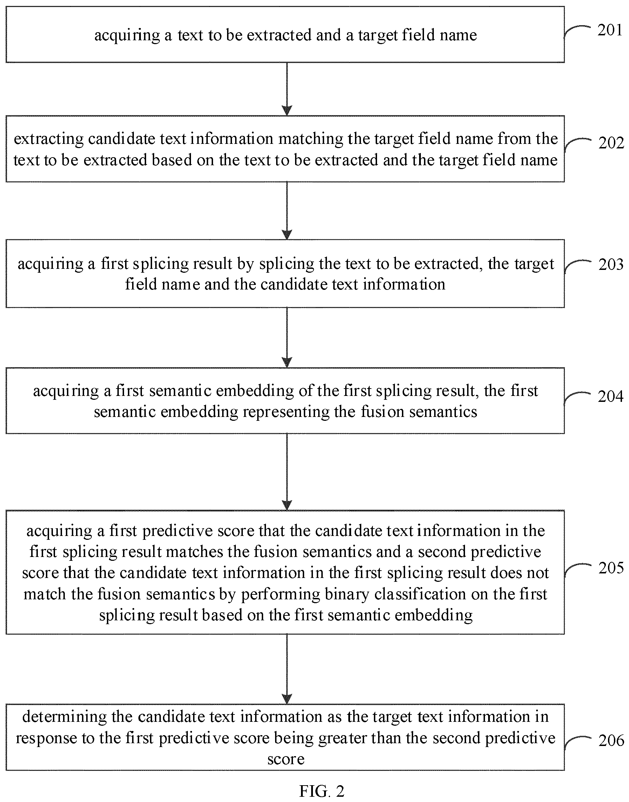

In combination with FIG. 2, in the method for extracting text information provided in the disclosure, the process of acquiring the target text information matching the fusion semantics of the text to be extracted, the target field name and the candidate text information by filtering the candidate text information based on the fusion semantics is further described.

FIG. 2 is a flowchart of a method for extracting text information according to a second embodiment of the disclosure. As illustrated in FIG. 2, the method for extracting text information may include the following.

At block 201, a text to be extracted and a target field name are acquired.

At block 202, candidate text information matching the target field name is extracted from the text to be extracted based on the text to be extracted and the target field name.

The candidate text information is an intermediate result extracted from text information in some embodiments of the disclosure.

It needs to be noted that, in some embodiments of the disclosure, any manner for extracting text information in the related art may be adopted, to extract the candidate text information matching the target field name from the text to be extracted based on the text to be extracted and the target field name, which is not limited in the disclosure.

A possible implementation of 202 is described as below.

In some embodiments of the disclosure, block 202 may be achieved by: acquiring a second splicing result by splicing the text to be extracted and the target field name; acquiring second semantic embeddings of characters in the second splicing result; acquiring third predictive scores that the characters match the target field name respectively and fourth predictive scores that the characters do not match the target field name respectively by performing secondary classification on the characters based on the second semantic embeddings of the characters; and acquiring the candidate text information by splicing target characters in the characters; in which the target characters are characters with the third predictive scores being greater than the fourth predictive scores.

The text to be extracted and the target field name may be spliced based on a preset splicing rule. For example, the second splicing result may be acquired by splicing the text to be extracted and the target field name based on a rule of "[CLS] the text to be extracted [SEP] the target field name [SEP]". [CLS] and [SEP] are special characters in the NLP field.

For example, if it is assumed that the text to be extracted is "Party A: Zhang San", and the target field name is "Party A", the second splicing result may be "[CLS] Party A: Zhang San [SEP] Party A [SEP]".

The characters in the second splicing result include at least one character acquired by performing word segmentation on the text to be extracted and at least one character acquired by performing word segmentation on the target field name. Word segmentation may be performed on the text to be extracted and the target field name respectively, for example, based on an enhanced representation through knowledge integration (ERNIE) vocabulary, to acquire the at least one character.

In some embodiments of the disclosure, when the second splicing result is acquired, token embeddings, segment embeddings and position embeddings of the plurality of characters in the second splicing result may be acquired respectively, and added respectively to acquire the input embeddings of the characters, and then the input embeddings of the characters may be spliced into a feature matrix, and the feature matrix is input into a feature extraction model, and when the feature extraction model fully extracts features, the underlying semantic embeddings of the characters output by the feature extraction model are taken as the second semantic embeddings of the characters.

The feature extraction module may be any model that may achieve feature extraction, for example, an enhanced representation through knowledge integration (ERNIE) model, which is not limited in the disclosure.

The segment embedding is configured to differentiate sentences. For example, for a character in a first sentence, the segment embedding of this character is 0, for a character in a second sentence, the segment embedding of this character is 1. In some embodiments of the disclosure, the segment embedding of each character in the text to be extracted in the second splicing result is the same, that is, the segment embedding 0; and the segment embedding of each character in the target field name is the same, that is, the segment embedding 1.

The position embedding of each character, represents a position where the character is located in the second splicing result. For example, when a certain character is a first character in the second splicing result, the position embedding of this character is 0; and when a certain character is a second character in the second splicing result, the position embedding of this character is 1.

When the token embeddings, the segment embeddings and the position embeddings of the characters are added respectively to acquire the input embeddings of the characters, the input embeddings of the characters are spliced and input into the feature extraction model, to acquire the second semantic embeddings of the characters in the second splicing result, thereby improving the accuracy of the second semantic embeddings of the characters in the acquired second splicing result.

Further, when the second semantic embeddings of the characters in the second splicing result are acquired, the second semantic embeddings of the characters may be input into a classifier, and the second semantic embeddings of the characters may be mapped to a binary space using the classifier, to acquire third predictive scores that the characters match the target field name respectively and fourth predictive scores that the characters do not match the target field name respectively. The mapping process may be represented by the following equation (1):

$$C_i = E_i W + b \quad (1)$$

where, $E_i \in R^{1*d}$ represents a second semantic embedding of an $i^{th}$ character. $W \in R^{d*2}$, $b \in R^{1*2}$ are learnable parameters of the classifier. $C_i \in R^{1*2}$ is a secondary classification output of the classifier. R represents an embedding space, and d represents a dimension.

The classifier may be any binary classifier or multi-classifier that may achieve classification, which is not limited in the disclosure.

When the classifier maps the second semantic embedding to 1, it indicates that the character matches the target field name; and when the classifier maps the second semantic embedding to 0, it indicates that the character does not match the target field name.

In some embodiments of the disclosure, third predictive scores that the characters match the target field name respectively and fourth predictive scores that the characters do not match the target field name respectively may be acquired based on the output of the classifier, and further the characters with the corresponding third predicted scores greater than the fourth predicted scores in the plurality of characters may be tagged as I, and the characters with the third predicted scores less than or equal to the fourth predicted scores in the plurality of characters may be tagged as 0. The character tagged as I is a target character. Further, the candidate text information may be acquired by splicing the characters tagged as I. The candidate text information may be acquired by splicing the continuous I characters together.

The character tagged as I, indicates that the character is in the candidate text information matching the target field name; and the character tagged as 0, indicates that the character is not in the candidate text information matching the target field name.

Third predictive scores that the characters match the target field name respectively and fourth predictive scores that the characters do not match the target field name respectively are acquired by performing secondary classification on the characters based on the second semantic embeddings of the characters, and further the candidate text information is acquired by splicing the target characters in the plurality of characters, which improves the accuracy of the acquired candidate text information.

At block 203, a first splicing result is acquired by splicing the text to be extracted, the target field name and the candidate text information.

The text to be extracted, the target field name and the candidate text information may be spliced based on a preset splicing rule, for example, the first splicing result may be acquired by splicing the text to be extracted, the target field name and the candidate text information based on a rule of "[CLS] the text to be extracted [SEP] the target field name [SEP] the candidate text information [SEP]".

For example, if it is assumed that the text to be extracted is "Party A: Zhang San", the target field name is "Party A", and the candidate text information is "Zhang San", the first splicing result may be "[CLS] Party A: Zhang San [SEP] Party A [SEP] Zhang San [SEP]".

At block 204, a first semantic embedding of the first splicing result is acquired, the first semantic embedding representing the fusion semantics.

In some embodiments of the disclosure, 204 may be achieved by: acquiring token embeddings, segment embeddings and position embeddings of characters in the first splicing result; acquiring input embeddings of the characters by adding the token embeddings, the segment embeddings and the position embeddings of the characters respectively; and acquiring the first semantic embedding of the first splicing result by splicing the input embeddings of the characters and inputting the spliced input embedding into a feature extraction model.

The characters in the first splicing result include at least one character acquired by performing word segmentation on the text to be extracted, at least one character acquired by performing word segmentation on the target field name and at least one character acquired by performing word segmentation on the candidate text information. Word segmentation may be performed on the text to be extracted, the target field name and the candidate text information based on the ERNIE vocabulary, for example, to acquire respectively the at least one character.

In some embodiments of the disclosure, the token embeddings, the segment embeddings and the position embeddings of the characters in the first splicing result may be acquired, and the input embeddings of the characters may be acquired by adding the token embeddings, the segment embeddings and the position embeddings of the characters respectively, and then the input embeddings of the characters may be spliced into a feature matrix, and the feature matrix is input into the feature extraction model, and when the feature extraction model fully extracts features, the feature embedding of [CLS] output by the feature extraction model may be taken as the first semantic embedding of the first splicing result. Since feature extraction is performed by the feature extraction model, the feature embedding of [CLS] is fully interacted with the input embeddings of the characters in the text to be extracted, the target field name and the candidate text information, thereby taking the feature embedding of [CLS] as the first semantic embedding representing the fusion semantics of the whole first splicing result.

It should be noted that, in some embodiments of the disclosure, when the first semantic embedding of the first splicing result is acquired, and the second semantic embeddings of the plurality of characters in the second splicing result are acquired, parameters of the feature extraction model used are not shared.

In some embodiments of the disclosure, in the first splicing result, the segment embedding of each character in the text to be extracted is the same, that is, the segment embedding 0; and the segment embedding of each character in the target field name is the same, that is, the segment embedding 1; and the segment embedding of each character in the candidate text information is the same, that is, the segment embedding 2.

When the input embeddings of the characters are acquired by adding the token embeddings, the segment embeddings and the position embeddings of the characters respectively, the input embeddings of the characters are spliced and input into the feature extraction model, to acquire the first semantic embedding of the first splicing result, which achieves acquiring the first semantic embedding of the first splicing result by fully extracting the features of the text to be extracted, the target field name and the candidate text information using the feature extraction model, thereby improving the accuracy of the first semantic embedding of the acquired first splicing result.

At block 205, a first predictive score that the candidate text information in the first splicing result matches the fusion semantics and a second predictive score that the candidate text information in the first splicing result does not match the fusion semantics are acquired by performing binary classification on the first splicing result based on the first semantic embedding.

In some embodiments of the disclosure, block 205 may be achieved by: acquiring a first probability that the candidate text information matches the fusion semantics and a second probability that the candidate text information does not match the fusion semantics by inputting the first semantic embedding into a classifier; and taking the first probability as a first predictive score and the second probability as a second predictive score.

The classifier may be any binary classifier or multi-classifier that may achieve classification, which is not limited in the disclosure.

Specifically, the first probability that the candidate text information matches the fusion semantics and the second probability that the candidate text information does not match the fusion semantics may be acquired by inputting the first semantic embedding into the classifier and mapping the first semantic embedding to a binary space using the classifier. The mapping process may be represented by the following equation (2):

$$Out = VW' + b' \quad (2)$$

where, $V \in R^{1*d}$ represents the first semantic embedding of the first splicing result. $W' \in R^{d*2}$, $b' \in R^{1*2}$ are learnable parameters of the classifier. $Out \in R^{1*2}$ is a secondary classification output of the classifier. R represents an embedding space, and $d$ represents a dimension.

When the classifier maps the first semantic embedding to 1, it indicates that the candidate text information in the first splicing result matches the fusion semantics; and when the classifier maps the first semantic embedding to 0, it indicates that the candidate text information in the first splicing result does not match the fusion semantics.

In some embodiments of the disclosure, the first probability that the candidate text information matches the fusion semantics and the second probability that the candidate text information does not match the fusion semantics may be acquired based on the output of the classifier, and the first probability may be taken as the first predictive score and the second probability may be taken as the second predictive score. Therefore, the first predictive score that the candidate text information in the first splicing result matches the fusion semantics and the second predictive score that the candidate text information in the first splicing result does not match the fusion semantics may be accurately determined.

At block 206, the candidate text information is determined as the target text information in response to the first predictive score being greater than the second predictive score.

In some embodiments of the disclosure, it may be determined that the candidate text information in the first splicing result matches the fusion semantics in response to the first predictive score being greater than the second predictive score, thereby determining that the candidate text information does not need to be filtered out, that is, determining the candidate text information as the target text information. It may be determined that the candidate text information in the first splicing result does not match the fusion semantics in response to the first predictive score being less than or equal to the second predictive score, thereby determining that the candidate text information needs to be filtered out, and further deleting the candidate text information.

In the method for extracting text information in some embodiments of the disclosure, the text to be extracted and the target field name are acquired, the candidate text information matching the target field name is extracted from the text to be extracted based on the text to be extracted and the target field name, and the first splicing result is acquired by splicing the text to be extracted, the target field name and the candidate text information. The first semantic embedding of the first splicing result is acquired, the first semantic embedding representing the fusion semantics, and the first predictive score that the candidate text information in the first splicing result matches the fusion semantics and the second predictive score that the candidate text information in the first splicing result does not match the fusion semantics are acquired by performing binary classification on the first splicing result based on the first semantic embedding, and the candidate text information is determined as the target text information in response to the first predictive score being greater than the second predictive score, which achieves accurate filtering of candidate text information, further to improve the accuracy of target text information extracted from the text information.

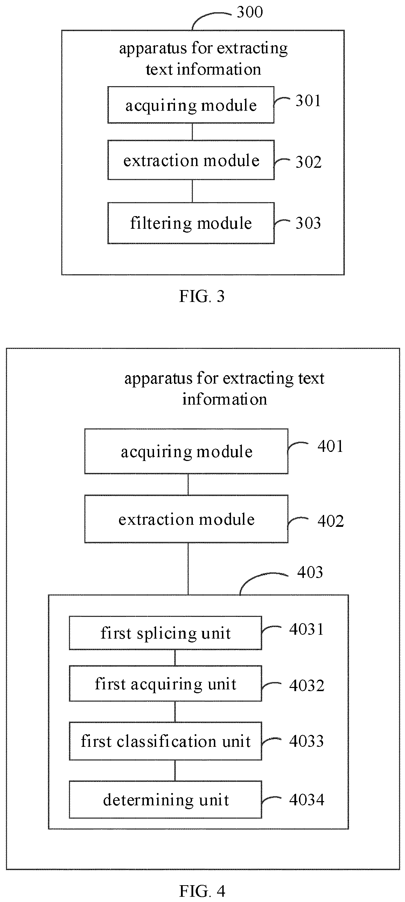

In combination with FIG. 3, the apparatus for extracting text information provided in the disclosure is described.

FIG. 3 is a diagram of a structure of an apparatus for extracting text information according to a third embodiment of the disclosure.

As illustrated in FIG. 3, the apparatus 300 for extracting text information includes an acquiring module 301, an extraction module 302 and a filtering module 303.

The acquiring module 301 is configured to acquire a text to be extracted and a target field name; the extraction module 302 is configured to extract candidate text information matching the target field name from the text to be extracted based on the text to be extracted and the target field name; and the filtering module 303 is configured to acquire target text information matching fusion semantics of the text to be extracted, the target field name and the candidate text information by filtering the candidate text information based on the fusion semantics.

It should be noted that, the apparatus 300 for extracting text information in some embodiments of the disclosure may perform the method for extracting text information in the above embodiments. It needs to be noted that, the executive body of the method for extracting text information in the above embodiments may be implemented by means of software and/or hardware and may be configured in an electronic device. The electronic device may include but not limited to a terminal device such as a smart phone a computer, or a server, which is not limited in the disclosure.

It should be noted that the foregoing explanation of the embodiments of the method for extracting text information is also applied to the apparatus for extracting text information in some embodiments, which will not be repeated herein.

In the apparatus for extracting text information in some embodiments of the disclosure, the text to be extracted and the target field name are acquired, the candidate text information matching the target field name is extracted from the text to be extracted based on the text to be extracted and the target field name, and further the target text information matching the fusion semantics of the text to be extracted, the target field name and the candidate text information is acquired by filtering the candidate text information based on the fusion semantics, which improves the accuracy of extracting text information.

In combination with FIG. 4, the apparatus for extracting text information provided in the disclosure is further described.

FIG. 4 is a diagram of a structure of an apparatus for extracting text information according to a fourth embodiment of the disclosure.

As illustrated in FIG. 4, the apparatus 400 for extracting text information specifically may include an acquiring module 401, an extraction module 402 and a filtering module 403. The acquiring module 401, the extraction module 402 and the filtering module 403 in FIG. 4 have the same functions and structures as the acquiring module 301, the extraction module 302 and the filtering module 303 in FIG. 3.

In some embodiments of the disclosure, the filtering module 403 includes a first splicing unit 4031, a first acquiring unit 4032, a first classification unit 4033 and a determining unit 4034.

The first splicing unit 4031 is configured to acquire a first splicing result by splicing the text to be extracted, the target field name and the candidate text information; the first acquiring unit 4032 is configured to acquire a first semantic embedding of the first splicing result, the first semantic embedding representing the fusion semantics; the first classification unit 4033 is configured to acquire a first predictive score that the candidate text information in the first splicing result matches the fusion semantics and a second predictive score that the candidate text information in the first splicing result does not match the fusion semantics by performing binary classification on the first splicing result based on the first semantic embedding; and the determining unit 4034 is configured to determine the candidate text information as the target text information in response to the first predictive score being greater than the second predictive score.

In some embodiments of the disclosure, the first acquiring unit 4032 includes a first acquiring subunit, a first processing subunit and a second processing subunit.

The first acquiring subunit is configured to acquire token embeddings, segment embeddings and position embeddings of characters in the first splicing result; the first processing subunit is configured to acquire input embeddings of the characters by adding the token embeddings, the segment embeddings and the position embeddings of the characters respectively; and the second processing subunit is configured to acquire the first semantic embedding of the first splicing result by splicing the input embeddings of the characters, and inputting the spliced input embedding into a feature extraction model.

In some embodiments of the disclosure, the first classification unit 4033 includes a second acquiring subunit and a third processing subunit.

The second acquiring subunit is configured to acquire a first probability that the candidate text information matches the fusion semantics and a second probability that the candidate text information does not match the fusion semantics by inputting the first semantic embedding into a classifier; and the third processing subunit is configured to take the first probability as the first predictive score and the second probability as the second predictive score.

In some embodiments of the disclosure, the extraction module 402 includes a second splicing unit, a second acquiring unit, a second classification unit and a third splicing unit.

The second splicing unit is configured to acquire a second splicing result by splicing the text to be extracted and the target field name; the second acquiring unit is configured to acquire second semantic embeddings of characters in the second splicing result; the second classification unit is configured to acquire third predictive scores that the characters match the target field name respectively and fourth predictive scores that the characters do not match the target field name respectively by performing secondary classification on the characters based on the second semantic embeddings of the characters; and the third splicing unit is configured to acquire the candidate text information by splicing target characters in the characters; in which the target characters are characters with the third predictive scores being greater than the fourth predictive scores.

It should be noted that the foregoing explanation of the embodiments of the method for extracting text information is also applied to the apparatus for extracting text information in some embodiments, which will not be repeated herein.

In the apparatus for extracting text information in some embodiments of the disclosure, the text to be extracted and the target field name are acquired, the candidate text information matching the target field name is extracted from the text to be extracted based on the text to be extracted and the target field name, and further the target text information matching the fusion semantics of the text to be extracted, the target field name and the candidate text information is acquired by filtering the candidate text information based on the fusion semantics, which improves the accuracy of extracting text information.

Based on the above embodiments, an electronic device is further provided, and includes: at least one processor; and a memory communicatively connected to the at least one processor; in which the memory is stored with instructions executable by the at least one processor, and when the instructions are executed by the at least one processor, the at least one processor may perform the method for extracting text information in the disclosure.

Based on the above embodiments, a non-transitory computer readable storage medium stored with computer instructions is further provided. The computer instructions are configured to cause a computer to perform the method for extracting text information in the disclosure.

Based on the above embodiments, a computer program product including a computer program is provided. When the computer program is performed by a processor, the method for extracting text information is performed.

According to some embodiments of the disclosure, an electronic device, a readable storage medium and a computer program product are further provided.

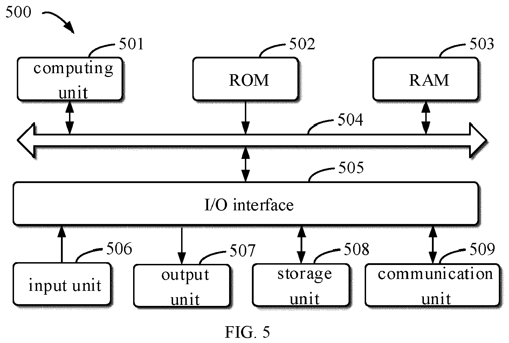

FIG. 5 is a schematic block diagram illustrating an example electronic device 500 in some embodiments of the disclosure. An electronic device is intended to represent various types of digital computers, such as laptop computers, desktop computers, workstations, personal digital assistants, servers, blade servers, mainframe computers, and other suitable computers. An electronic device may also represent various types of mobile apparatuses, such as personal digital assistants, cellular phones, smart phones, wearable devices, and other similar computing devices. The components shown herein, their connections and relations, and their functions are merely examples, and are not intended to limit the implementation of the disclosure described and/or required herein.

As illustrated in FIG. 5, the electronic device 500 may include a computing unit 501, which may execute various appropriate actions and processings based on a computer program stored in a read-only memory (ROM) 502 or a computer program loaded into a random access memory (RAM) 503 from a storage unit 508. In a RAM 503, various programs and data required for a device 500 may be stored. The computing unit 501, the ROM 502, and the RAM 503 are connected to each other through a bus 504. An input/output (I/O) interface 505 is also connected to a bus 504.

Several components in the device 500 are connected to the I/O interface 505, and include: an input unit 506, for example, a keyboard, a mouse, etc.; an output unit 507, for example, various types of displays, speakers, etc.; a storage unit 508, for example, a magnetic disk, an optical disk, etc.; and a communication unit 509, for example, a network card, a modem, a wireless communication transceiver, etc. The communication unit 509 allows the device 500 to exchange information/data with other devices over a computer network such as the Internet and/or various telecommunication networks.

The computing unit 501 may be various general and/or dedicated processing components with processing and computing ability. Some examples of a computing unit 501 include but not limited to a central processing unit (CPU), a graphics processing unit (GPU), various dedicated artificial intelligence (AI) computing chips, various computing units running a machine learning model algorithm, a digital signal processor (DSP), and any appropriate processor, controller, microcontroller, etc. The computing unit 501 executes various methods and processings as described above, for example, a method for extracting text information. For example, in some embodiments, the method for extracting text information may be further achieved as a computer software program, which is physically contained in a machine readable medium, such as a storage unit 508. In some embodiments, a part or all of the computer program may be loaded and/or installed on the device 500 through a ROM 502 and/or a communication unit 509. When the computer program is loaded on a RAM 503 and performed by a computing unit 501, one or more blocks in the above method for extracting text information may be performed. Alternatively, in other embodiments, a computing unit 501 may be configured to perform a method for extracting text information in other appropriate ways (for example, by virtue of a firmware).

Various implementation modes of the systems and technologies described above may be achieved in a digital electronic circuit system, a field programmable gate array (FPGA), an application-specific integrated circuit (ASIC), an application specific standard product (ASSP), a system-on-chip (SOC) system, a complex programmable logic device (CPLD), a computer hardware, a firmware, a software, and/or combinations thereof. The various implementation modes may include: being implemented in one or more computer programs, the one or more computer programs may be executed and/or interpreted on a programmable system including at least one programmable processor, the programmable processor may be a dedicated or a general-purpose programmable processor that may receive data and instructions from a storage system, at least one input apparatus, and at least one output apparatus, and transmit the data and instructions to the storage system, the at least one input apparatus, and the at least one output apparatus.

A computer code configured to execute a method in the disclosure may be written with one or any combination of a plurality of programming languages. The programming languages may be provided to a processor or a controller of a general purpose computer, a dedicated computer, or other apparatuses for programmable data processing so that the function/operation specified in the flowchart and/or block diagram may be performed when the program code is executed by the processor or controller. A computer code may be performed completely or partly on the machine, performed partly on the machine as an independent software package and performed partly or completely on the remote machine or server.

In the context of the disclosure, a machine-readable medium may be a tangible medium that may contain or store a program intended for use in or in conjunction with an instruction execution system, apparatus, or device. A machine readable medium may be a machine readable signal medium or a machine readable storage medium. A machine readable storage medium may include but not limited to an electronic, magnetic, optical, electromagnetic, infrared, or semiconductor system, apparatus or device, or any appropriate combination thereof. A more specific example of a machine readable storage medium includes an electronic connector with one or more cables, a portable computer disk, a hardware, a random access memory (RAM), a read-only memory (ROM), an erasable programmable read-only memory (an EPROM or a flash memory), an optical fiber device, and a portable optical disk read-only memory (CDROM), an optical storage device, a magnetic storage device, or any appropriate combination of the above.

In order to provide interaction with the user, the systems and technologies described here may be implemented on a computer, and the computer has: a display apparatus for displaying information to the user (for example, a CRT (cathode ray tube) or a LCD (liquid crystal display) monitor); and a keyboard and a pointing apparatus (for example, a mouse or a trackball) through which the user may provide input to the computer. Other types of apparatuses may further be configured to provide interaction with the user; for example, the feedback provided to the user may be any form of sensory feedback (for example, visual feedback, auditory feedback, or tactile feedback); and input from the user may be received in any form (including an acoustic input, a speech input, or a tactile input).

The systems and technologies described herein may be implemented in a computing system including back-end components (for example, as a data server), or a computing system including middleware components (for example, an application server), or a computing system including front-end components (for example, a user computer with a graphical user interface or a web browser through which the user may interact with the implementation mode of the system and technology described herein), or a computing system including any combination of such back-end components, middleware components or front-end components. The system components may be connected to each other through any form or medium of digital data communication (for example, a communication network). Examples of communication networks include: a local area network (LAN), a wide area network (WAN), an internet and a blockchain network.

The computer system may include a client and a server. The client and server are generally far away from each other and generally interact with each other through a communication network. The relationship between the client and the server is generated by computer programs running on the corresponding computer and having a client-server relationship with each other. A server may be a cloud server, also known as a cloud computing server or a cloud host, is a host product in a cloud computing service system, to solve the shortcomings of large management difficulty and weak business expansibility existed in the conventional physical host and Virtual Private Server (VPS) service. A server may be a cloud server, and further may be a server of a distributed system, or a server in combination with a blockchain.

It should be noted that, AI is a subject that learns by a computer simulating certain thinking processes and intelligent behaviors (such as learning, reasoning, thinking, planning, etc.) of human beings, which covers hardware-level technologies and software-level technologies. AI hardware technologies generally include technologies such as sensors, dedicated AI chips, cloud computing, distributed storage, big data processing, etc.; AI software technologies mainly include computer vision technology, speech recognition technology, NLP technology and ML, DL, big data processing technology, KG technology, etc.

It should be understood that, various forms of procedures shown above may be configured to reorder, add or delete blocks. For example, blocks described in the disclosure may be executed in parallel, sequentially, or in different orders, as long as the desired result of the technical solution disclosed in the disclosure may be achieved, which will not be limited herein.

The above specific implementations do not constitute a limitation on the protection scope of the disclosure. Those skilled in the art should understand that various modifications, combinations, sub-combinations and substitutions may be made according to design requirements and other factors.

**Claims**

1. A method for extracting text information, comprising:

   acquiring (101; 201) a text to be extracted and a target field name;
   extracting (102; 202) candidate text information matching the target field name from the text to be extracted based on the text to be extracted and the target field name; and
   acquiring (103) target text information matching fusion semantics of the text to be extracted, the target field name and the candidate text information by filtering the candidate text information based on the fusion semantics.

2. The method of claim 1, wherein, acquiring (103) the target text information matching the fusion semantics of the text to be extracted, the target field name and the candidate text information by filtering the candidate text information based on the fusion semantics, comprising:

   acquiring (203) a first splicing result by splicing the text to be extracted, the target field name and the candidate text information;
   acquiring (204) a first semantic embedding of the first splicing result, the first semantic embedding representing the fusion semantics;
   acquiring (205) a first predictive score that the candidate text information in the first splicing result matches the fusion semantics and a second predictive score that the candidate text information in the first splicing result does not match the fusion semantics by performing binary classification on the first splicing result based on the first semantic embedding; and
   determining (206) the candidate text information as the target text information in response to the first predictive score being greater than the second predictive score.

3. The method of claim 2, wherein, acquiring (S204) the first semantic embedding of the first splicing result, comprising:

   acquiring token embeddings, segment embeddings and position embeddings of characters in the first splicing result;
   acquiring input embeddings of the characters by adding the token embeddings, the segment embeddings and the position embeddings of the characters respectively; and
   acquiring the first semantic embedding of the first splicing result by splicing the input embeddings of the characters and inputting the spliced input embedding into a feature extraction model.

4. The method of claim 2 or 3, wherein, acquiring (205) the first predictive score that the candidate text information in the first splicing result matches the fusion semantics and the second predictive score that the candidate text information in the first splicing result does not match the fusion semantics by performing the binary classification on the first splicing result based on the first semantic embedding, comprising:

   acquiring a first probability that the candidate text information matches the fusion semantics and a second probability that the candidate text information does not match the fusion semantics by inputting the first semantic embedding into a classifier; and
   taking the first probability as the first predictive score and the second probability as the second predictive score.

5. The method of any of claims 1 to 4, wherein, extracting (102; 202) the candidate text information matching the target field name from the text to be extracted based on the text to be extracted and the target field name, comprising:

   acquiring a second splicing result by splicing the text to be extracted and the target field name;
   acquiring second semantic embeddings of characters in the second splicing result;
   acquiring third predictive scores that the characters match the target field name respectively and fourth predictive scores that the characters do not match the target field name respectively by performing secondary classification on the characters based on the second semantic embeddings of the characters; and
   acquiring the candidate text information by splicing target characters in the characters;

   wherein, the target characters are characters with the third predictive scores being greater than the fourth predictive scores.

6. An apparatus for extracting text information, comprising:

   an acquiring module (301; 401), configured to acquire a text to be extracted and a target field name;
an extraction module (302; 402), configured to extract candidate text information matching the target field name from the text to be extracted based on the text to be extracted and the target field name; and
a filtering module (303; 403), configured to acquire target text information matching fusion semantics of the text to be extracted, the target field name and the candidate text information by filtering the candidate text information based on the fusion semantics.

7. The apparatus of claim 6, wherein, the filtering module (303; 403), comprises:

a first splicing unit (4031), configured to acquire a first splicing result by splicing the text to be extracted, the target field name and the candidate text information;
a first acquiring unit (4032), configured to acquire a first semantic embedding of the first splicing result, the first semantic embedding representing the fusion semantics;
a first classification unit (4033), configured to acquire a first predictive score that the candidate text information in the first splicing result matches the fusion semantics and a second predictive score that the candidate text information in the first splicing result does not match the fusion semantics by performing binary classification on the first splicing result based on the first semantic embedding; and
a determining unit (4034), configured to determine the candidate text information as the target text information in response to the first predictive score being greater than the second predictive score.

8. The apparatus of claim 7, wherein, the first acquiring unit (4032), comprising:

a first acquiring subunit, configured to acquire token embeddings, segment embeddings and position embeddings of characters in the first splicing result;
a first processing subunit, configured to acquire input embeddings of the characters by adding the token embeddings, the segment embeddings and the position embeddings of the characters respectively; and
a second processing subunit, configured to acquire the first semantic embedding of the first splicing result by splicing the input embeddings of the characters, and inputting the spliced input embedding into a feature extraction model.

9. The apparatus of claim 7 or 8, wherein, the first classification unit (4033), comprises:

a second acquiring subunit, configured to acquire a first probability that the candidate text information matches the fusion semantics and a second probability that the candidate text information does not match the fusion semantics by inputting the first semantic embedding into a classifier; and
a third processing subunit, configured to take the first probability as the first predictive score and the second probability as the second predictive score.

10. The apparatus of any of claims 6 to 9, wherein, the extraction module (303; 403), comprises:

a second splicing unit, configured to acquire a second splicing result by splicing the text to be extracted and the target field name;
a second acquiring unit, configured to acquire second semantic embeddings of characters in the second splicing result;
a second classification unit, configured to acquire third predictive scores that the characters match the target field name respectively and fourth predictive scores that the characters do not match the target field name respectively by performing secondary classification on the characters based on the second semantic embeddings of the characters; and
a third splicing unit, configured to acquire the candidate text information by splicing target characters in the characters; wherein, the target characters are characters with the third predictive scores being greater than the fourth predictive scores.

11. An electronic device, comprising:

at least one processor; and
a memory communicatively connected to the at least one processor; wherein,
the memory is stored with instructions executable by the at least one processor, and when the instructions are performed by the at least one processor, the at least one processor is caused to perform the method of any of claims 1 to 5.

12. A non-transitory computer readable storage medium stored with computer instructions, wherein the computer instructions are configured to cause a computer to perform the method of any of claims 1 to 5.

13. A computer program product, comprising a computer program, wherein the computer program is caused to perform the method of any of claims 1 to 5 when performed by a processor.

acquiring a text to be extracted and a target field name ⌐ 101

extracting candidate text information matching the target field name from the text to be extracted based on the text to be extracted and the target field name ⌐ 102

acquiring target text information matching fusion semantics of the text to be extracted, the target field name and the candidate text information by filtering the candidate text information based on the fusion semantics ⌐ 103

FIG. 1

acquiring a text to be extracted and a target field name ⌐ 201

extracting candidate text information matching the target field name from the text to be extracted based on the text to be extracted and the target field name ⌐ 202

acquiring a first splicing result by splicing the text to be extracted, the target field name and the candidate text information ⌐ 203

acquiring a first semantic embedding of the first splicing result, the first semantic embedding representing the fusion semantics ⌐ 204

acquiring a first predictive score that the candidate text information in the first splicing result matches the fusion semantics and a second predictive score that the candidate text information in the first splicing result does not match the fusion semantics by performing binary classification on the first splicing result based on the first semantic embedding ⌐ 205

determining the candidate text information as the target text information in response to the first predictive score being greater than the second predictive score ⌐ 206

FIG. 2

300

apparatus for extracting
text information

acquiring module ⌐ 301

extraction module ⌐ 302

filtering module ⌐ 303

FIG. 3

apparatus for extracting text
information

acquiring module ⌐ 401

extraction module ⌐ 402

403

first splicing unit ⌐ 4031

first acquiring unit ⌐ 4032

first classification unit ⌐ 4033

determining unit ⌐ 4034

FIG. 4

500

501

computing
unit

502

ROM

503

RAM

504

505

I/O interface

506

input unit

507

output
unit

508

storage
unit

509

communication
unit

FIG. 5